# EUROPEAN PATENT SPECIFICATION

(11) **EP 2 913 519 B1**
(45) Date of publication and mention of the grant of the patent: **22.02.2017**
(21) Application number: 12891233.4
(22) Date of filing: 28.12.2012
(51) Int. Cl.: F03D 15/00, F03D 1/00, F03D 1/06, F03D 80/70

(54) **WIND TURBINE POWER GENERATION APPARATUS**
WINDTURBINENENERGIEERZEUGUNGSVORRICHTUNG
APPAREIL DE GÉNÉRATION D'ÉNERGIE ÉOLIENNE

(43) Date of publication of application: 02.09.2015
(73) Proprietor: Mitsubishi Heavy Industries, Ltd., Tokyo 108-8215 (JP)
(72) Inventor: NISHIDA, Hideaki, Tokyo 108-8215 (JP); NODA, Yoshitomo, Tokyo 108-8215 (JP); YUGE, Atsushi, Tokyo 108-8215 (JP)
(74) Representative: Intès, Didier Gérard André
(86) International application number: PCT/JP2012/084092
(87) International publication number: WO 2014/103018

(56) References cited:
- JP-A- 2011 163 420
- JP-A- 2012 017 735
- US-A1- 2003 080 566
- US-A1- 2012 139 242

## Description

### TECHNICAL FIELD

The present disclosure relates to a wind turbine power generating apparatus.

### BACKGROUND

A wind turbine power generating apparatus has drawn attention as a renewable energy power generating apparatus in view of the increasing environmental awareness. A wind turbine power generating apparatus generally includes a rotor in which a plurality of blades is mounted to a hub. A rotor is mounted on a nacelle disposed on a tower built on the ground or on the ocean. In a wind turbine power generating apparatus of this type, the rotor rotates upon receiving wind at the blades so that the rotation is transmitted to a generator accommodated in the nacelle by a drivetrain part, and thereby electric power is generated in the generator.

Patent document 1 discloses a wind turbine power generating apparatus using a hydraulic pump and a hydraulic motor as a drivetrain part. In this wind turbine power generating apparatus, rotation of a rotor is transmitted to a hydraulic pump via a rotation shaft. The hydraulic pump is driven by the rotation shaft to produce pressurized oil, and the pressurized oil drives a hydraulic motor. Then, in a generator coupled to the hydraulic motor, rotation energy inputted from the hydraulic motor is converted into electric energy.

### Citation List

### Patent Literature

Patent Document 1: US Patent Application Pub. No. 2010/0032959A

### SUMMARY

### Technical problem

Patent Document 1 discloses several examples of layout for a bearing and a hydraulic pump. However, it is hard to say that there is an adequately established layout of a bearing and a driven unit that satisfies the purposes of improving maintainability of the driven unit such as the hydraulic pump (a unit driven by a rotation shaft), reducing the bearing load, simplifying the configuration of the bearing, etc.

An object of at least one embodiment of the present invention is to provide a wind turbine power generating apparatus with high maintainability for a drive unit, and a small bearing load. Further, an object of another embodiment of the present invention is to provide a wind turbine power generating apparatus with a simple-structure bearing for rotatably supporting the rotation shaft.

### Solution to problem

A wind turbine power generating apparatus according to at least one embodiment of the present invention includes: at least one blade; a hub to which the at least one blade is mounted; a rotation shaft configured to rotate with the hub; a front bearing for rotatably supporting the rotation shaft; a rear bearing for rotatably supporting the rotation shaft, disposed farther from the hub than the front bearing; a driven unit disposed between the front bearing and the rear bearing, and configured to be driven by the rotation shaft; and an auxiliary bearing disposed between the front bearing and the driven unit. The auxiliary bearing is configured to assist the front bearing and support the rotation shaft rotatably while the rear bearing is removed from the rotation shaft, and not to support a load from the rotation shaft while the rear bearing is attached to the rotation shaft.

With the above wind turbine power generating apparatus, since the driven unit is disposed between the front bearing and the rear bearing, it is possible to secure a relatively large bearing span (a distance between the front bearing and the rear bearing) while restricting the shaft length of the rotation shaft. Thus, it is possible to reduce the bearing load.

Further, when maintenance is performed on the driven unit disposed between the front bearing and the rear bearing, it is possible to support the rotation shaft with the front bearing and the auxiliary bearing rotatably even if it is necessary to remove the rear bearing. As a result, it is possible to easily perform maintenance on the driven unit while preventing an excess load from being applied to the front bearing.

In one embodiment, the auxiliary bearing is disposed between the rotation shaft and a stationary member of the wind turbine power generating apparatus so that a gap is formed between the auxiliary bearing and one of the rotation shaft or the stationary member while the rear bearing is attached to the rotation shaft. Further, a size of the gap is set so that the auxiliary bearing is in contact with the one of the rotation shaft or the stationary member while the rear bearing is removed from the rotation shaft.

In one embodiment, at least one of the front bearing or the rear bearing includes a slide bearing. With at least one of the front bearing or the rear bearing including a slide bearing having a simplified structure, it is possible to address the increasing size of the wind turbine power generating apparatus. That is, while the bearing load tends to increase due to the increasing size of the wind turbine power generating apparatus, it may be difficult to further increase the size of a ball bearing, which is generally used as a bearing for rotatably supporting the rotation shaft of the wind turbine power generating apparatus, because there are limitations on the manufacture facilities and technologies. In contrast, a slide bearing has a relatively simplified structure, and therefore can be easily increased in size. Thus, it is possible to design a slide bearing which withstands the bearing load predicted in the wind turbine power generating apparatus of the increased size.

In one embodiment, the slide bearing is a hydrostatic bearing configured to support the rotation shaft rotatably with fluid which is supplied between the rotation shaft and a slide surface of the slide bearing.

Using the hydrostatic bearing as the slide bearing makes it possible to increase the load capacity of the slide bearing even in a case where oil of a low viscosity is used as lubricant oil. Further, it is possible to reduce the size of the slide bearing.

In one embodiment, the driven unit is a hydraulic pump, and the fluid is working oil of the hydraulic pump.

In one embodiment, the wind turbine power generating apparatus further includes lubricant oil which is held between the rotation shaft and a slide surface of the slide bearing, and which has a viscosity of not less than VG 160. With the lubricant oil of a high viscosity held between the slide surface of the slide bearing and the rotation shaft, it is possible to form oil film between the slide surface of the slide bearing and the rotation shaft without providing a hydrostatic bearing mechanism.

In on embodiment, the wind turbine power generating apparatus further includes lubricant grease held between the rotation shaft and a slide surface of the slide bearing. With the lubricant grease held between the slide surface of the slide bearing and the rotation shaft, it is no longer necessary to provide a pump for supplying lubricant oil or the like. As a result, configuration of the lubricating system is simplified, which is advantageous in terms of cost and weight.

In one embodiment, the front bearing is the slide bearing, and clearance is formed between the front bearing and an end at a hub side of a housing of the front bearing.

The load applied to the rotor (gravity load due to the weight of the rotor itself, or wind load) is applied to the load receiving point in the vicinity of the center of the hub. This load receiving point is outwardly spaced from the bearing support point (the position of the front bearing), which may cause the front bearing to contact its housing partially due to the moment load acting as the bearing load. Thus, as described above, the gap is formed between the front bearing and the end of the housing of the front bearing (slide bearing), the end being adjacent to the hub. In this way, rigidity is reduced at a back surface of the end at the hub side of the front bearing, and thus the partial contact of the front bearing is reduced. As a result, it is possible to restrict a decrease in the load capacity of the front bearing due to the partial contact, and to secure a high load capacity of the front bearing.

In one embodiment, the front bearing is the slide bearing, and the clearance formed between the front bearing and the end at the hub side of the housing of the front bearing includes a member which has a rigidity lower than that of the housing.

Since the member having a lower rigidity than the housing is disposed in the clearance, the rigidity at the back surface of the end at the hub side of the front bearing is decreased, which makes it possible to reduce the partial contact of the front bearing. Thus, it is possible to restrict a decrease in the load capacity of the front bearing due to the partial contact, and to secure a high load capacity of the front bearing.

In one embodiment, the front bearing is the slide bearing, and a resin layer is disposed between the front bearing and the rotation shaft. The partial contact of the front bearing is reduced because the resin layer has low rigidity and is likely to be deformed by external force. Thus, it is possible to restrict a decrease in the load capacity of the front bearing due to the partial contact, and to secure a high load capacity of the front bearing.

In one embodiment, the front bearing is the slide bearing, and the front bearing includes a slit on an end at the hub side.

In one embodiment, the front bearing is the slide bearing, and a contact surface of the front bearing which contacts the housing of the front bearing is curved at least in an axial direction of the rotation shaft. Further, a contact surface of the housing which contacts the front bearing is curved at least in the axial direction, and has an inverted shape of the contact surface of the front bearing.

In this case, the front bearing is rotatable relative to the housing, which reduces the partial contact of the front bearing. Thus, it is possible to restrict a decrease in the load capacity of the front bearing due to the partial contact, and to secure a high load capacity of the front bearing.

In one embodiment, the front bearing includes the slide bearing, and the rear bearing is a thrust bearing which is configured to support a load of a moment about the front bearing.

In one embodiment, the rear bearing is disposed at a farthest position from the front bearing and on a circumference of a tower of the wind turbine power generating apparatus. In this case, it is possible to transmit the load from the rear bearing to the tower directly while having a long distance (bearing span) between the front bearing and the rear bearing.

A wind turbine power generating apparatus according to at least one embodiment of the present invention includes: at least one blade; a hub to which the at least one blade is mounted; a rotation shaft configured to rotate with the hub; at least one slide bearing for rotatably supporting the rotation shaft; and at least one thrust bearing for supporting a thrust load in an axial direction of the rotation shaft.

With the above wind turbine power generating apparatus, since at least one slide bearing is used as the bearing for rotatably supporting the rotation shaft, it is possible to address the increasing size of the wind turbine power generating apparatus. That is, a slide bearing has a relatively simplified structure, and therefore can be easily increased in size. Thus, it is possible to design a slide bearing which withstands the bearing load predicted in the wind turbine power generating apparatus of the increased size. Further, using at least one thrust bearing in combination makes it possible to securely support the thrust load, which is difficult to bear with the slide bearing, with the thrust bearing.

In one embodiment, the at least one slide bearing includes a front bearing, and a rear bearing disposed farther from the hub than the front bearing.

In one embodiment, the at least one thrust bearing is disposed farther from the hub than one of the at least one slide bearing, and configured to support a load of a moment about the one of the at least one slide bearing.

According to at least one embodiment of the present invention, it is possible to secure a relatively large bearing span (a distance between the front bearing and the rear bearing) while restricting the shaft length of the rotation shaft. Thus, it is possible to reduce the bearing load. Further, it is possible to easily perform maintenance on the driven unit while preventing an excess load from being applied to the front bearing.

### BRIEF DESCRIPTION OF DRAWINGS

FIG. 1 is a schematic diagram of an overall configuration of a wind turbine power generating apparatus according to one embodiment of the present invention.
FIG. 2 is a partial cross-sectional view of a wind turbine power generating apparatus according to one embodiment.
FIG. 3 is a cross-sectional view where a rear bearing is removed from a rotation shaft, according to one embodiment.
FIG. 4 is a cross-sectional view where the rear bearing is removed from the rotation shaft, and an auxiliary bearing is in contact with the rotation shaft, according to one embodiment.
FIG. 5 is a partial cross-sectional view of a wind turbine power generating apparatus according to another embodiment.
FIG. 6 is a cross-sectional view where the rear bearing is removed from the rotation shaft, according to one embodiment.
FIG. 7 is a cross-sectional view where the rear bearing is removed from the rotation shaft, and an auxiliary bearing is in contact with a stationary member, according to one embodiment.
FIG. 8 is a partial cross-sectional view of a wind turbine power generating apparatus according to another embodiment.
FIG. 9A is a cross-sectional view where a slide bearing is a hydrostatic bearing, and the slide bearing rotatably supports the rotation shaft. FIG. 9B is a cross-sectional view of a pocket of the hydrostatic bearing and its surrounding configuration.
FIGs. 10 to 14 are each a cross-sectional view of a configuration of a front bearing when the front bearing is a slide bearing according to one embodiment.
FIG. 15 is a schematic diagram of a relationship of positions between the rear bearing and a tower according to one embodiment.
FIGs. 16 and 17 are each a cross-sectional view of a wind turbine power generating apparatus according to one embodiment not part of the invention.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

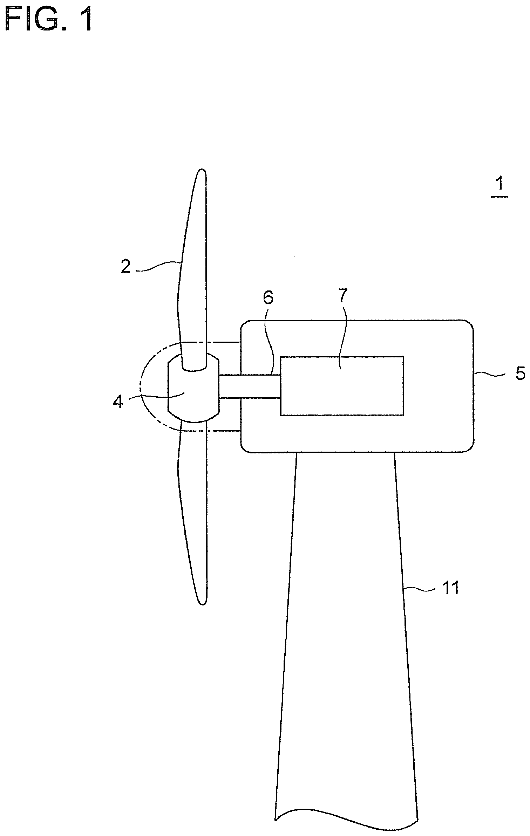

FIG. 1 is a schematic diagram of an overall configuration of a wind turbine power generating apparatus 1 according to one embodiment. As illustrated in the drawing, the wind turbine power generating apparatus 1 according to one embodiment includes at least one blade 2, a hub 4 to which the at least one blade 2 is mounted, a rotation shaft 6 configured to rotate with the hub 4, a driven unit 7 configured to be driven by the rotation shaft 6, a nacelle 5 which accommodates the driven unit 7, and a tower 11 supporting the nacelle 5. In one embodiment, the driven unit 7 is a hydraulic pump. In another embodiment, the driven unit 7 is a generator.

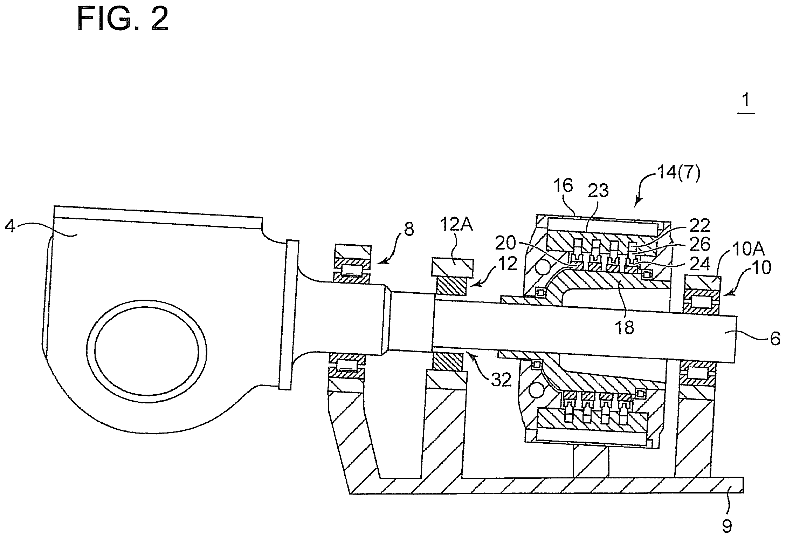

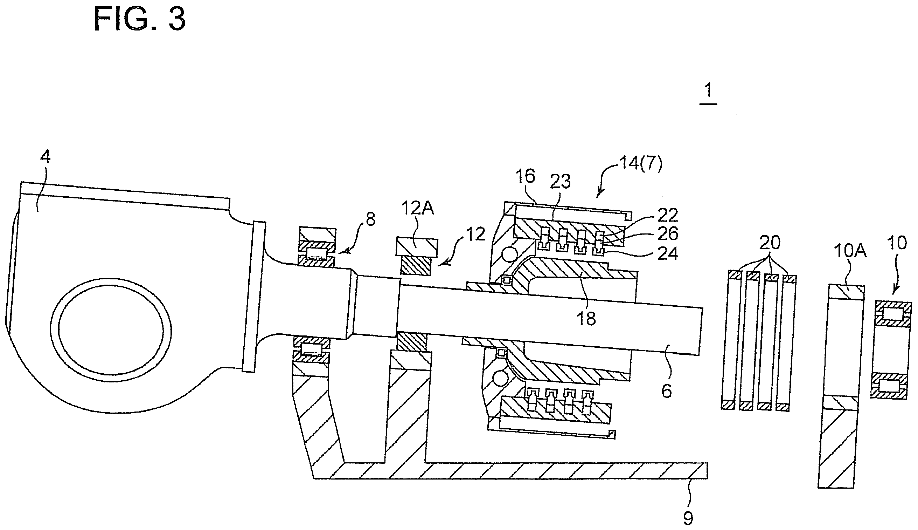

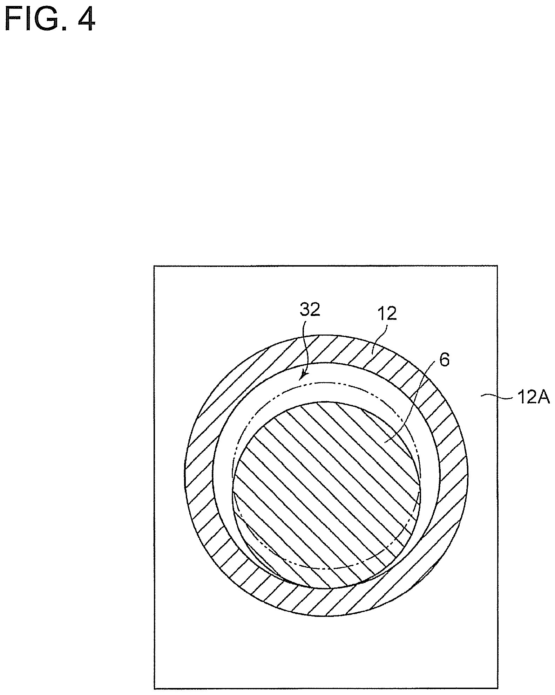

FIG. 2 is a partial cross-sectional view of the wind turbine power generating apparatus 1 according to one embodiment. FIG. 3 is a cross-sectional view of the wind turbine power generating apparatus 1, where a rear bearing 10 is removed from a rotation shaft 6, according to one embodiment. FIG. 4 is a cross-sectional view where the rear bearing 10 is removed from the rotation shaft 6, and an auxiliary bearing 12 is in contact with the rotation shaft 6, according to one embodiment. The two-dotted chain line in FIG. 4 indicates the position of the rotation shaft 6 at the time when the rear bearing 10 is attached to the rotation shaft 6.

As illustrated in FIG. 2, the wind turbine power generating apparatus 1 according to one embodiment includes a front bearing 8 for rotatably supporting the rotation shaft 6, and the rear bearing 10, disposed further from the hub 4 than the front bearing 8, for rotatably supporting the rotation shaft 6. Between the front bearing 8 and the rear bearing 10, disposed is a hydraulic pump 14 (driven unit 7) configured to be driven by the rotation shaft 6. Further, an auxiliary bearing 12 is disposed between the front bearing 8 and the driven unit 7. The auxiliary bearing 12 is supported on the nacelle base plate 9 via a housing 12A, while the rear bearing 10 is supported on the nacelle base plate 9 via a housing 10A.

The hydraulic pump 14 is supported on the nacelle base plate 9, and includes a stator section 16, and a rotor section 18 coupled to the rotation shaft 6. A cam 20, a cylinder block 23 including a plurality of cylinders 22, a plurality of pistons 26 to which rollers 24 are attached, are disposed in a space surrounded by the stator section 16 and the rotor section 18. In one embodiment, the cam 20 is disposed on the outer circumferential surface of the rotor section 18 and configured to rotate with the rotor section 18. Each piston 26 is configured to be driven by the ring cam 20 via corresponding one of the rollers 24 contacting the cam 20, and slide inside corresponding one of the cylinders 22.

In some embodiments, the auxiliary bearing 12 rotatably supports the rotation shaft 6 by assisting the front bearing 8 while the rear bearing 10 is removed from the rotation shaft 6, and not to support the load from the rotation shaft 6 while the rear bearing 10 is attached to the rotation shaft 6.

In one embodiment, as illustrated in FIG. 2, the auxiliary bearing 12 is disposed so that a gap 32 is formed between the auxiliary bearing 12 and the rotation shaft 6 while the rear bearing 10 is attached to the rotation shaft 6. The size of the gap 32 is set such that the auxiliary bearing 12 contacts the rotation shaft 6 when the rear bearing 10 is removed from the rotation shaft 6.

The hydraulic pump 14, which serves as the driven unit 7, is disposed between the front bearing 8 and the rear bearing 10 as described above, and includes components which require maintenance, such as the ring cam 20, the rollers 24, and the pistons 26. When maintenance is carried out on one of the above components, it may be occasionally necessary to remove the component subject to maintenance (maintenance-target component) from the hydraulic pump 14. In this case, the rear bearing 10 may be temporarily removed to facilitate removal of the maintenance-target component from the hydraulic pump 14.

Even if it is necessary to remove the rear bearing 10 as described above, it is possible to rotatably support the rotation shaft 6 with the front bearing 8 and the auxiliary bearing 12, because the auxiliary bearing 12 of the wind turbine power generating apparatus 1 according to the above embodiment is configured to assist the front bearing 8 and rotatably support the rotation shaft 6 when the rear bearing 10 is removed from the rotation shaft 6.

In the exemplary embodiment illustrated in FIG. 3, when the rear bearing 10 is removed from the rotation shaft 6, the rotation shaft 6 bound by the front bearing 8 tilts about the front bearing 8. As a result, as illustrated in FIG. 4, the rotation shaft 6 moves closer to the auxiliary bearing 12, so that the gap 32 (see FIG. 2) partially disappears between the auxiliary bearing 12 and the rotation shaft 6, and the auxiliary bearing 12 and the rotation shaft 6 contact each other partially. This is because, as described above, the size of the gap 32 is set so that the auxiliary bearing 12 and the rotation shaft 6 contact each other when the rear bearing 10 is removed from the rotation shaft 6. Once the auxiliary bearing 12 contacts the rotation shaft 6 at least partially, the rotation shaft 6 is rotatably supported by the front bearing 8 and the auxiliary bearing 12.

Here, the tilting direction of the rotation shaft 6 upon removal of the rear bearing 10 from the rotation shaft 6 depends on the position of the front bearing 8, the weight of the blade 2 and the hub 4, the weight of the hydraulic pump 14 (drive unit 7), and the like.

In the exemplary embodiment illustrated in FIGs. 2 to 4, the driven unit (hydraulic pump 14) is disposed between the front bearing 8 and the rear bearing 10, which makes it possible to secure a relatively long bearing span (a distance between the front bearing 8 and the rear bearing 10) while restricting the shaft length of the rotation shaft 6. Thus, it is possible to reduce the bearing load.

Further, it is possible to perform maintenance on the driven unit 7 (hydraulic pump 14) while preventing an excess load from being applied to the front bearing 8.

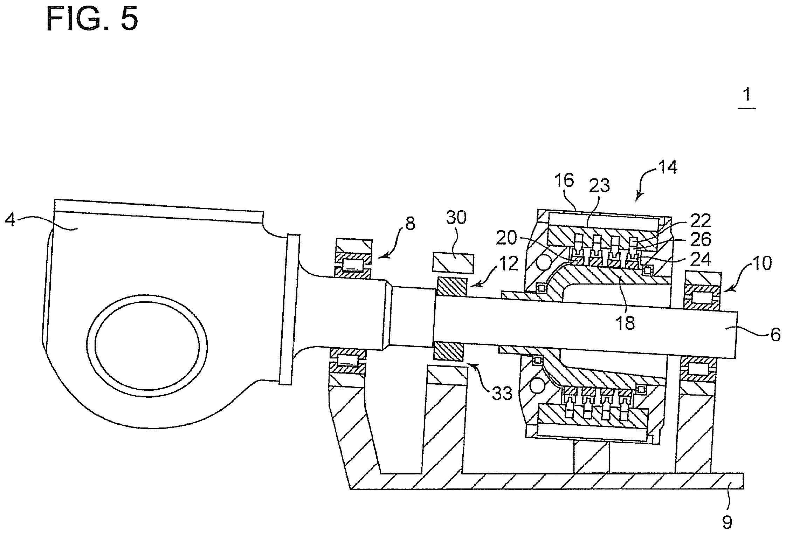

FIG. 5 is a partial cross-sectional view of a wind turbine power generating apparatus 1 according to another embodiment. In the exemplary embodiment in the drawing, the auxiliary bearing 12 of the wind turbine power generating apparatus 1 is disposed on the rotation shaft 6, and is arranged so that a gap 33 is formed between the auxiliary bearing 12 and the stationary member (bearing housing) 30 while the rear bearing 10 is attached to the rotation shaft 6. The size of the gap 33 is set so that the auxiliary bearing 12 contacts the stationary member (bearing housing) 30 when the rear bearing 10 is removed from the rotation shaft 6.

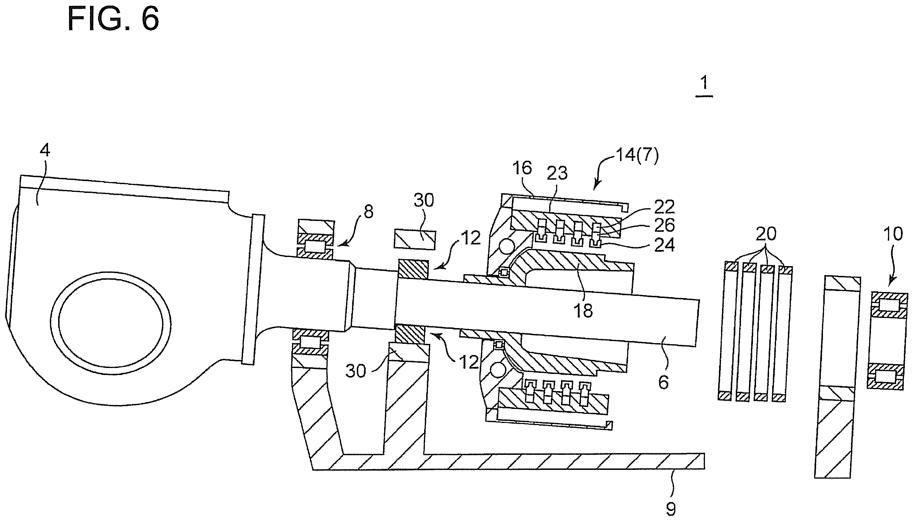

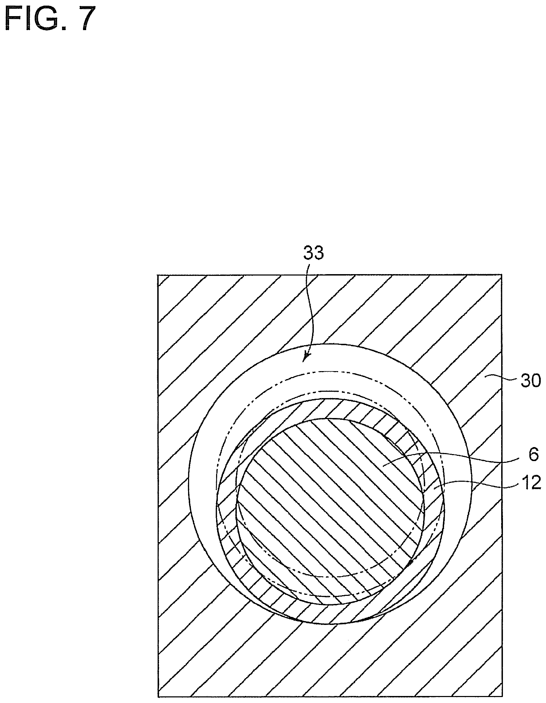

FIG. 6 is a cross-sectional view where the rear bearing 10 is removed from the rotation shaft 6, according to one embodiment. FIG. 7 is a cross-sectional view where the rear bearing 10 is removed from the rotation shaft 6 and an auxiliary bearing 12 is in contact with a stationary member 30, according to one embodiment. The two-dotted chain line in FIG. 7 indicates the positions of the rotation shaft 6 and the auxiliary bearing 12 at the time when the rear bearing 10 is attached to the rotation shaft 6.

In the exemplary embodiment illustrated in FIG. 6, once the rear bearing 10 is removed from the rotation shaft 6, the rotation shaft 6 bound by the front bearing 8 tilts about the front bearing 8. As a result, as illustrated in FIG. 7, the rotation shaft 6 and the auxiliary bearing 12 move closer to the stationary member (bearing housing) 30, so that the gap 33 (see FIG. 5) between the auxiliary bearing 12 and the stationary member 30 disappears partially, and the auxiliary bearing 12 and the stationary member 30 contact each other partially. This is because, as described above, the size of the gap 33 is set so that the auxiliary bearing 12 and the stationary member 30 contact each other when the rear bearing 10 is removed from the rotation shaft 6. Once the auxiliary bearing 12 contacts the stationary member 30 at least partially, the rotation shaft 6 is rotatably supported by the front bearing 8 and the auxiliary bearing 12.

Specifically, the auxiliary bearing 12 assists the front bearing 8 and rotatably supports the rotation shaft 6 when the rear bearing 10 is removed from the rotation shaft 6, and not to support the load from the rotation shaft 6 while the rear bearing 10 is attached to the rotation shaft 6.

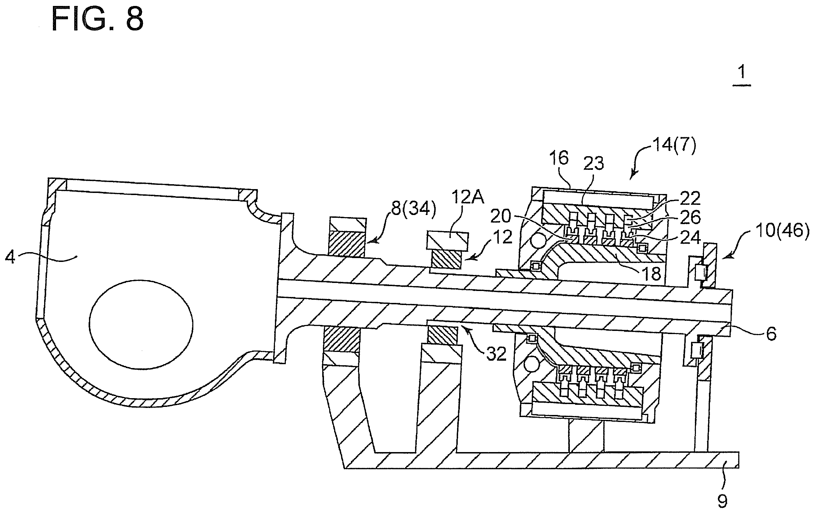

FIG. 8 is a partial cross-sectional view of a wind turbine power generating apparatus according to another embodiment. As illustrated in the drawing, in one embodiment, at least one of the front bearing 8 or the rear bearing 10 includes a slide bearing. Since a slide bearing with a simplified structure is used as at least one of the front bearing 8 or the rear bearing 10, it is possible to address the increase in the size of the wind turbine power generating apparatus 1. That is, while the bearing load tends to increase due to the increasing size of the wind turbine power generating apparatus 1, it may be difficult to further increase the size of a ball bearing, which is generally used as a bearing for rotatably supporting the rotation shaft 6 of the wind turbine power generating apparatus 1, because there are limitations on the manufacture facilities and technologies. In contrast, a slide bearing has a relatively simplified structure, and therefore can be increased in size easily. Thus, it is possible to design a slide bearing which withstands the bearing load predicted in the wind turbine power generating apparatus 1 of the increased size.

As illustrated in the drawing, in one embodiment, the front bearing 8 is a slide bearing, and the rear bearing 10 is a thrust bearing configured to support a load of a moment about the front bearing 8.

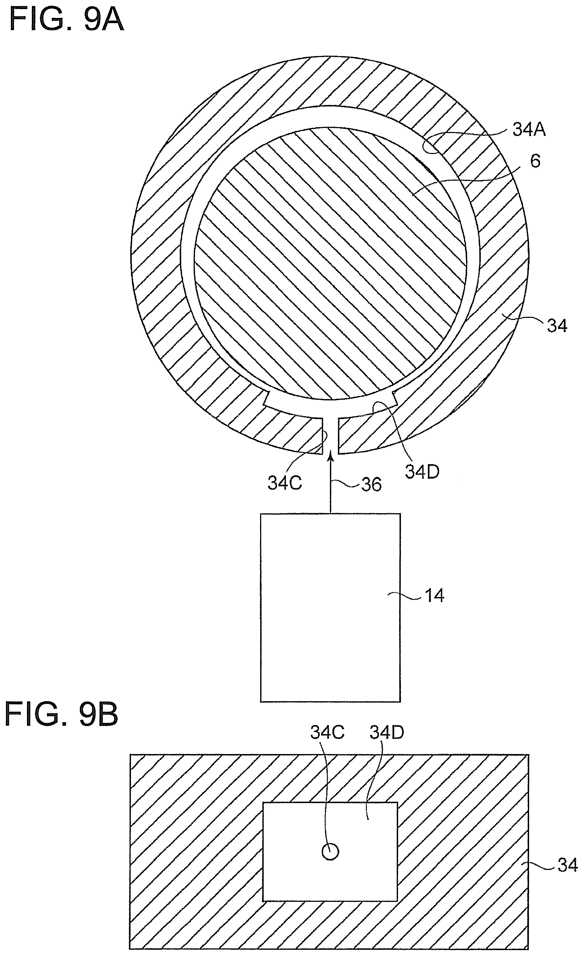

FIG. 9A is a cross-sectional view where the slide bearing 34 is a hydrostatic bearing and the slide bearing 34 rotatably supports the rotation shaft 6. FIG. 9B is a cross-sectional view of a pocket of the hydrostatic bearing and its surrounding configuration. As illustrated in FIG. 9A, in one embodiment, the slide bearing 34 is a hydrostatic bearing configured to rotatably support the rotation shaft 6 with fluid 36 supplied between the rotation shaft 6 and the slide surface 34A of the slide bearing 34. Since a hydrostatic bearing is used as the slide bearing 34, it is possible to increase the load capacity of the slide bearing 34 even if oil of a low viscosity is used as lubricant oil. Further, it is possible to reduce the size of the slide bearing 34.

In one embodiment, the fluid 36 supplied between the rotation shaft 6 and the slide surface 34A is working oil of the hydraulic pump 14 serving as the driven unit 7. As illustrated in FIGs. 9A and 9B, the fluid 36 is supplied between the rotation shaft 6 and the slide surface 34A of the slide bearing 34 via a supply aperture 34C disposed in a pocket 34D from the hydraulic pump 14, thereby supporting the rotation shaft 6 rotatably.

In one embodiment, lubricant oil having a viscosity of VG 160 or more is held between the slide surface 34A of the slide bearing 34 and the rotation shaft 6. With the lubricant oil of a high viscosity held between the slide surface 34A of the slide bearing 34 and the rotation shaft 6, it is possible to form oil film between the slide surface 34A of the slide bearing 34 and the rotation shaft 6 without providing a hydrostatic bearing mechanism.

In one embodiment, lubricant grease is held between the slide surface 34A of the slide bearing 34 and the rotation shaft 6. With the lubricant grease held between the slide surface 34A of the slide bearing 34 and the rotation shaft 6, it is no longer necessary to provide a pump for supplying lubricant oil or the like. As a result, configuration of the lubricating system is simplified, which is advantageous in terms of cost and weight.

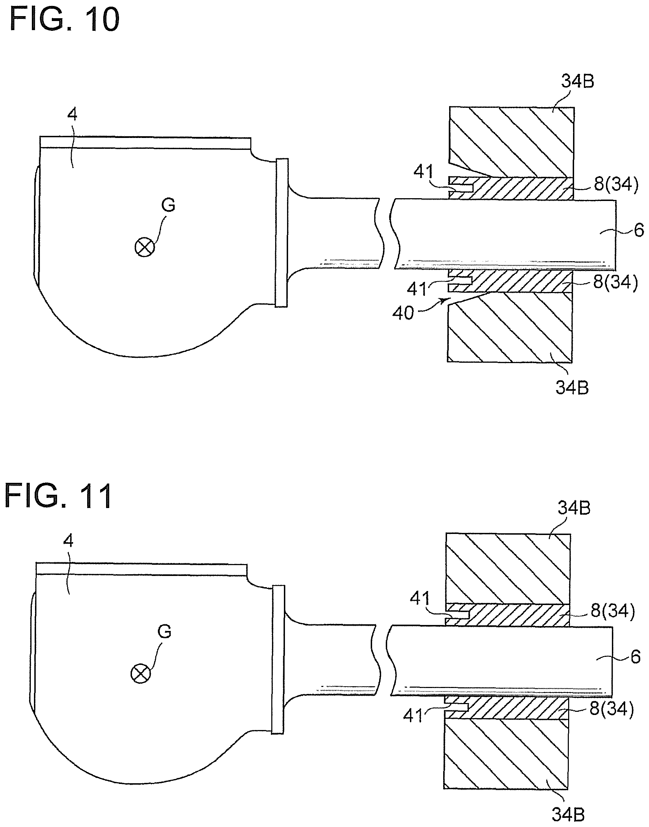

FIG. 10 is a cross-sectional view of a configuration of the front bearing 8 according to one embodiment. As illustrated in the drawing, in one embodiment, the front bearing 8 is the slide bearing 34. A clearance 40 is formed between the front bearing 8 and an end at a hub side of a housing 34B of the front bearing 8.

The load applied to the rotor (gravity load due to the weight of the rotor itself, or wind load) is applied to the load receiving point G in the vicinity of the center of the hub. This load receiving point G is outwardly spaced from the bearing support point (the position of the front bearing 8), which may cause the front bearing 8 to contact its housing partially due to the moment load acting as the bearing load. Thus, as described above, the clearance 40 is formed between the front bearing 8 and the end of the housing 34B of the front bearing 8 (slide bearing 34), the end being adjacent to the hub. In this way, rigidity at a back surface of the end at the hub side of the front bearing 8 is decreased, and thus the partial contact of the front bearing 8 is reduced. As a result, it is possible to restrict a decrease in the load capacity of the front bearing 8 due to the partial contact, and to secure a high load capacity of the front bearing 8.

In one embodiment, the front bearing 8 is the slide bearing 34, and clearance is formed between the front bearing 8 and an end at an opposite side to the hub of the housing 34B of the front bearing 8. As a result, upon maintenance of the driven unit 7, it is possible to prevent the rotation shaft 6 from partially contacting the front bearing 8.

FIG. 11 is a cross-sectional view of a configuration of the front bearing according to one embodiment, where the front bearing is a slide bearing. As illustrated in the drawing, in one embodiment, the front bearing 8 is the slide bearing 34, and a slit 41 is formed on the end at the hub side of the front bearing 8.

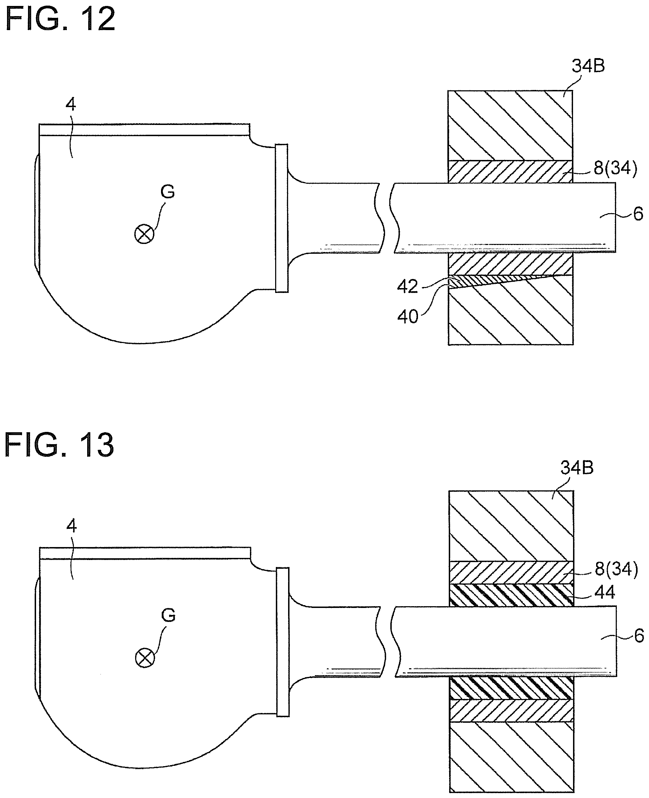

FIG. 12 is a cross-sectional view of a configuration of the front bearing 8 according to one embodiment, where the front bearing 8 is the slide bearing 34. As illustrated in the drawing, in one embodiment, the front bearing 8 is the slide bearing 34, and a member 42 is having a rigidity lower than that of the housing 34B is disposed in the clearance 40 formed between the front bearing 8 and the end at the hub side of the housing 34B of the front bearing 8.

Since the member 42 having a rigidity lower than that of the housing 34B is disposed in the clearance 40, the rigidity on the back surface of the end at the hub side of the front bearing 8 is decreased, which makes it possible to reduce the partial contact of the front bearing 8. Thus, it is possible to restrict a decrease in the load capacity of the front bearing 8 due to the partial contact, and to secure a high load capacity of the front bearing 8.

FIG. 13 is a cross-sectional view of a configuration of the front bearing 8 according to one embodiment, where the front bearing 8 is the slide bearing 34. In one embodiment, the front bearing 8 is the slide bearing 34, and a resin layer 44 is disposed between the front bearing 8 and the rotation shaft 6. The partial contact of the front bearing 8 is reduced because the resin layer 44 has a low rigidity and is likely to be deformed by external force. Thus, it is possible to restrict a decrease in the load capacity of the front bearing 8 due to the partial contact, and to secure a high load capacity of the front bearing 8.

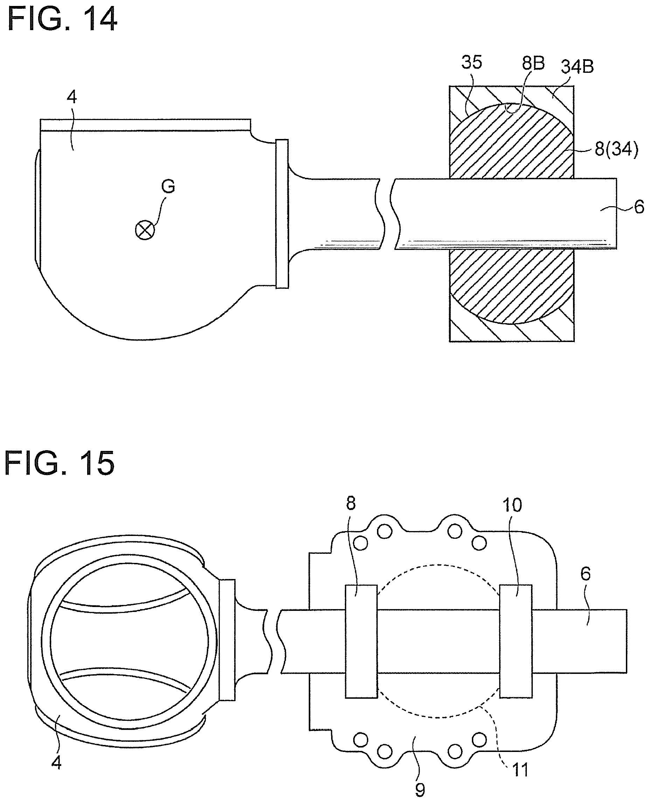

FIG. 14 is a cross-sectional view of a configuration of the front bearing 8 according to one embodiment, where the front bearing 8 is the slide bearing 34. In one embodiment, the front bearing 8 is the slide bearing 34, and a contact surface 8B of the front bearing 8 that contacts the housing 34B of the front bearing 8 is curved in the axial direction of the rotation shaft 6. The contact surface 8B of the front bearing 8 may have a shape of a spherical surface curved in the axial direction of the rotation shaft 6 and in a direction orthogonal to the axial direction of the rotation shaft 6, or a cylindrical shape curved in only the axial direction of the rotation shaft 6. A contact surface 35 of the housing 34B that contacts the front bearing 8 is curved in the axial direction, and has a reversed shape of the contact surface 8B of the front bearing 8.

In this case, the front bearing 8 is rotatable relative to the housing 34B, which reduces the partial contact of the front bearing 8. Thus, it is possible to restrict a decrease in the load capacity of the front bearing 8 due to the partial contact, and to secure a high load capacity of the front bearing 8.

FIG. 15 is a schematic diagram of a relationship of positions between the rear bearing 10 and the tower 11 according to one embodiment. As illustrated in the drawing, in one embodiment, the rear bearing 10 is disposed farthest from the front bearing 8 and on the circumference of the tower 11 of the wind turbine power generating apparatus 1. In this case, it is possible to transmit the load from the rear bearing 10 to the tower 11 directly while having a long distance (bearing span) between the front bearing 8 and the rear bearing 10.

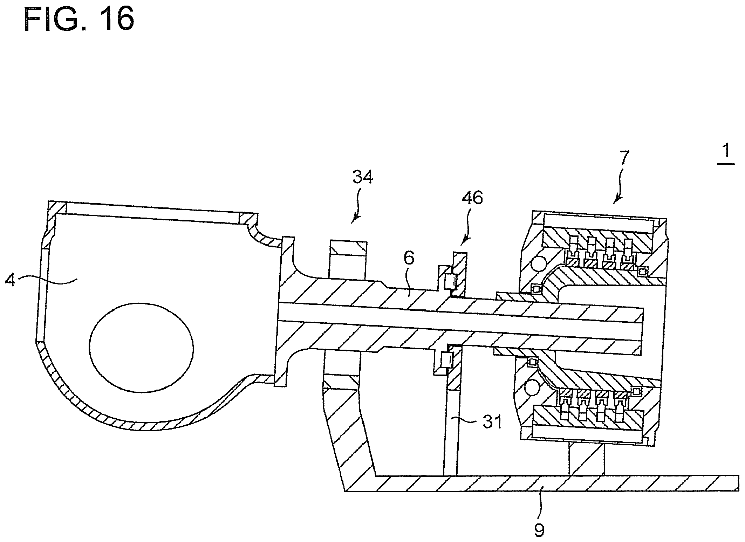

FIG. 16 is a cross-sectional view of a wind turbine power generating apparatus 1 according to one embodiment not part of the invention. As illustrated in the drawing, the wind turbine power generating apparatus 1 according to on embodiment includes the slide bearing 34 for rotatably supporting the rotation shaft 6, and a thrust bearing 46 for supporting a thrust load that is along the axial direction of the rotation shaft 6. The slide bearing 34 and the thrust bearing 46 are each supported on the nacelle base plate via the stationary member 31.

Since at least one slide bearing 34 is used as a bearing for rotatably supporting the rotation shaft 6, it is possible to address the increasing size of the wind turbine power generating apparatus 1. That is, the slide bearing 34 has a relatively simplified structure, and therefore can be easily increased in size. Thus, it is possible to design the slide bearing 34 so as to withstand the bearing load predicted in the wind turbine power generating apparatus 1 of the increased size. Further, using the at least one thrust bearing 46 in combination makes it possible to securely receive a thrust load, which is difficult to bear with the slide bearing 34, with the thrust bearing 46.

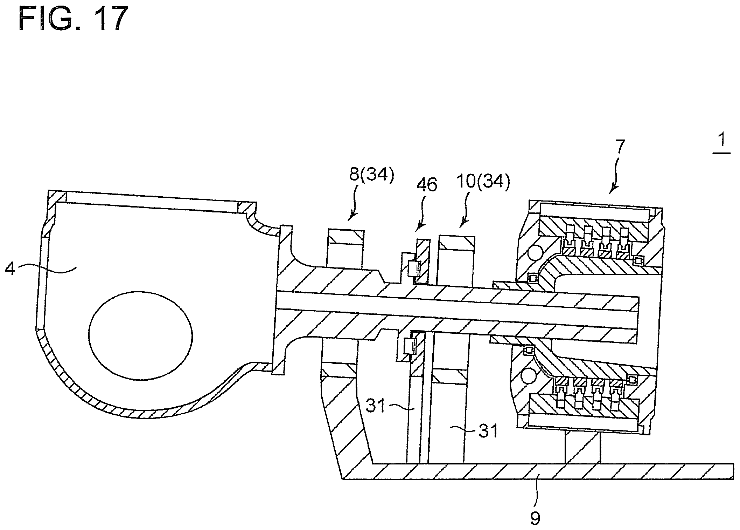

FIG. 17 is a cross-sectional view of a wind turbine power generating apparatus 1 according to one embodiment not part of the invention. As illustrated in the drawing, the wind turbine power generating apparatus 1 according to on embodiment includes the front bearing 8, the rear bearing 10 disposed farther from the hub 4 than the front bearing 8, and the thrust bearing 46 disposed between the front bearing 8 and the rear bearing 10. The front bearing 8 and the rear bearing 10 are slide bearings 34. As illustrated in the drawing, in one embodiment, the thrust bearing 46 is disposed farther from the hub 4 than the front bearing 8 being the slide bearing 34, and configured to support a load of a moment about the front bearing 8.

As described above, the wind turbine power generating apparatus 1 according to on embodiment of the present invention is capable of securing a relatively long bearing span (a distance between the front bearing 8 and the rear bearing 10) and reduce the bearing load while restricting the shaft length of the rotation shaft 6. Further, it is possible to facilitate maintenance of the driven unit 7 while preventing an excess load from being applied to the front bearing 8.

Embodiments of the present invention were described in detail above, but the present invention is not limited thereto, and various amendments and modifications may be implemented within a scope that does not depart from the present invention.

For instance, the slide bearing 34 of the exemplary embodiment illustrated in FIGs. 16 and 14 may have the configuration described in FIGs. 9 to 11. Specifically, in one embodiment, the slide bearing 34 of FIGs. 16 and 14 is a hydrostatic bearing configured to rotatably support the rotation shaft 6 with the fluid 36 supplied between the rotation shaft 6 and the slide surface 34A of the slide bearing 34, as illustrated in FIG. 9. In one embodiment, the fluid 36 supplied between the rotation shaft 6 and the slide surface 34A of the slide bearing 34 is working oil of the hydraulic pump 14 serving as the driven unit 7. In one embodiment, between the rotation shaft 6 and the slide surface 34A of the slide bearing 34, lubricant oil having a viscosity of not less than VG 160 is held. In one embodiment, lubricant grease is held between the rotation shaft 6 and the slide surface 34A of the slide bearing 34.

For the slide bearing 34 according to one embodiment, as illustrated in FIG. 10, clearance 40 is formed between the slide bearing 34 and the end at the hub side of the housing 34B. In the slide bearing 34 according to one embodiment, as illustrated in FIG. 11, a slit 41 is formed on the end at the hub side of the slide bearing 34. In the slide bearing 34 according to one embodiment, clearance is formed between the slide bearing 34 and the end at a side opposite to the hub of the housing 34B.

For the slide bearing 34 according to one embodiment, as illustrated in FIG. 12, a member 42 having a rigidity lower than that of the housing 34B is disposed in the clearance 40 formed between the slide bearing 34 and the end at the hub side of the housing 34B. In the slide bearing 34 according to one embodiment, as illustrated in FIG. 13, a resin layer 44 is formed between the slide bearing 34 and the rotation shaft 6.

For the slide bearing 34 according to one embodiment, as illustrated in FIG. 14, a contact surface of the slide bearing 34 that contacts the housing 34B is curved in the axial direction of the rotation shaft 6. The contact surface of the slide bearing 34 may have a shape of a spherical surface curved in the axial direction of the rotation shaft 6 and in a direction orthogonal to the axial direction of the rotation shaft 6, or a cylindrical shape curved only in the axial direction of the rotation shaft 6. A contact surface 35 of the housing 34B that contacts the slide bearing 34 is curved in the axial direction, and has a reversed shape of the contact surface of the slide bearing 34.

### Reference Signs List

- 1: wind turbine power generating apparatus
- 2: blade
- 4: hub
- 5: nacelle
- 6: rotation shaft
- 7: driven unit
- 8: front bearing
- 10: rear bearing
- 11: tower
- 12: auxiliary bearing
- 14: hydraulic pump
- 16: stator section
- 18: rotor section
- 20: ring cam
- 22: cylinder
- 24: roller
- 26: piston
- 30, 31: stationary member
- 32: gap
- 34: slide bearing
- 34A: slide surface
- 34B: housing
- 34C: supply aperture
- 34D: pocket
- 36: fluid
- 40: gap
- 41: slit
- 42: member with low rigidity
- 44: resin layer
- 46: thrust bearing

## Claims

1. A wind turbine power generating apparatus (1) comprising:
at least one blade (2);
a hub (4) to which the at least one blade (2) is mounted;
a rotation shaft (6) configured to rotate with the hub (4);
a front bearing (8) for rotatably supporting the rotation shaft (6);
a rear bearing (10) for rotatably supporting the rotation shaft (6), disposed farther from the hub (4) than the front bearing (8); and
a driven unit (7, 14) disposed between the front bearing (8) and the rear bearing (10), and configured to be driven by the rotation shaft (6);
**characterized in that** it comprises an auxiliary bearing (12) disposed between the front bearing (8) and the driven unit (7, 14),
wherein the auxiliary bearing (12) is configured to assist the front bearing (8) and support the rotation shaft (6) rotatably while the rear bearing (10) is removed from the rotation shaft (6), and not to support a load from the rotation shaft (6) while the rear bearing (10) is attached to the rotation shaft (6).

2. The wind turbine power generating apparatus (1) according to claim 1,
wherein the auxiliary bearing (12) is disposed between the rotation shaft (6) and a stationary member of the wind turbine power generating apparatus (1) so that a gap (32, 33) is formed between the auxiliary bearing (12) and one of the rotation shaft (6) or the stationary member (30) while the rear bearing (10) is attached to the rotation shaft (6), and
wherein a size of the gap (32, 33) is set so that the auxiliary bearing (12) is in contact with the one of the rotation shaft (6) or the stationary member (30) while the rear bearing (10) is removed from the rotation shaft (6).

3. The wind turbine power generating apparatus (1) according to claim 1,
wherein at least one of the front bearing (8) or the rear bearing (10) includes a slide bearing (34).

4. The wind turbine power generating apparatus (1) according to claim 3,
wherein the slide bearing (34) is a hydrostatic bearing configured to support the rotation shaft (6) rotatably with fluid (36) which is supplied between the rotation shaft (6) and a slide surface (34A) of the slide bearing (34).

5. The wind turbine power generating apparatus (1) according to claim 4,
wherein the driven unit (7, 14) is a hydraulic pump (14), and
wherein the fluid (36) is working oil of the hydraulic pump (14).

6. The wind turbine power generating apparatus (1) according to claim 3, further comprising
lubricant oil which is held between the rotation shaft (6) and a slide surface (34A) of the slide bearing (34), and which has a viscosity of not less than VG 160.

7. The wind turbine power generating apparatus (1) according to claim 3, further comprising
lubricant grease held between the rotation shaft (6) and a slide surface (34A) of the slide bearing (34).

8. The wind turbine power generating apparatus (1) according any one of claims 3 to 7,
wherein the front bearing (8) is the slide bearing (34), and
wherein clearance (40) is formed between the front bearing (8) and an end at a hub side of a housing (34B) of the front bearing (8).

9. The wind turbine power generating apparatus (1) according to claim 8,
wherein the clearance (40) includes a member (42) which has a rigidity lower than that of the housing (34B).

10. The wind turbine power generating apparatus (1) according to any one of claims 3 to 7,
wherein the front bearing (8) is the slide bearing (34), and
wherein the front bearing (8) includes a slit (41) on an end at the hub side.

11. The wind turbine power generating apparatus (1) according to any one of claims 3 to 10,
wherein the front bearing (8) is the slide bearing (34), and
wherein a resin layer (44) is disposed between the front bearing (8) and the rotation shaft (6).

12. The wind turbine power generating apparatus (1) according to any one of claims 3 to 11,
wherein the front bearing (8) is the slide bearing (34),
wherein a contact surface (8B) of the front bearing (8) which contacts the housing (34B) of the front bearing (8) is curved at least in an axial direction of the rotation shaft (6), and
wherein a contact surface (35) of the housing (34B) which contacts the front bearing (8) is curved at least in the axial direction, and has an inverted shape of the contact surface (8B) of the front bearing (8).

13. The wind turbine power generating apparatus (1) according to any one of claims 3 to 12,
wherein the front bearing (18) includes the slide bearing (34), and
wherein the rear bearing (10) is a thrust bearing (46) which is configured to support a load of a moment about the front bearing (8).

14. The wind turbine power generating apparatus (1) according to any one of claims 1 to 13,
wherein the rear bearing (10) is disposed at a farthest position from the front bearing (8) and on a circumference of a tower (11) of the wind turbine power generating apparatus (1).

## Patentansprüche

1. Windturbinen-Energieerzeugungsvorrichtung (1), umfassend:
mindestens ein Rotorblatt (2),
eine Nabe (4), an der das mindestens eine Rotorblatt (2) angebracht ist,
eine Drehwelle (6), die dazu ausgebildet ist, sich mit der Nabe (4) zu drehen,
ein vorderes Lager (8) zum drehbaren Lagern der Drehwelle (6),
ein hinteres Lager (10) zum drehbaren Lagern der Drehwelle (6), welches weiter von der Nabe (4) entfernt angeordnet ist als das vordere Lager (8), und
eine angetriebene Einheit (7, 14), die zwischen dem vorderen Lager (8) und dem hinteren Lager (10) angeordnet und dazu ausgebildet ist, durch die Drehwelle (6) angetrieben zu werden,
**dadurch gekennzeichnet, dass** sie ein Hilfslager (12) umfasst, das zwischen dem vorderen Lager (8) und der angetriebenen Einheit (7, 14) angeordnet ist,
wobei das Hilfslager (12) dazu ausgebildet ist, das vordere Lager (8) zu unterstützen und die Drehwelle (6) drehbar zu lagern, während das hintere Lager (10) von der Drehwelle (6) abgenommen ist, und eine Last der Drehwelle (6) nicht zu tragen, während das hintere Lager (10) an der Drehwelle (6) befestigt ist.

2. Windturbinen-Energieerzeugungsvorrichtung (1) nach Anspruch 1,
wobei das Hilfslager (12) zwischen der Drehwelle (6) und einem stationären Glied der Windturbinen-Energieerzeugungsvorrichtung (1) angeordnet ist, derart, dass zwischen dem Hilfslager (12) und einem aus der Gruppe umfassend die Drehwelle (6) und das stationäre Glied (30) ein Zwischenraum (32, 33) gebildet wird, während das hintere Lager (10) an der Drehwelle (6) befestigt ist, und
wobei eine Größe des Zwischenraums (32, 33) derart eingestellt ist, dass das Hilfslager (12) mit dem einen aus der Gruppe umfassend die Drehwelle (6) und das stationäre Glied (30) in Kontakt ist, während das hintere Lager (10) von der Drehwelle (6) abgenommen ist.

3. Windturbinen-Energieerzeugungsvorrichtung (1) nach Anspruch 1,
wobei mindestens eines aus der Gruppe umfassend das vordere Lager (8) und das hintere Lager (10) ein Gleitlager (34) umfasst.

4. Windturbinen-Energieerzeugungsvorrichtung (1) nach Anspruch 3,
wobei das Gleitlager (34) ein hydrostatisches Lager ist, das dazu ausgebildet ist, die Drehwelle (6) drehbar mit Fluid (36) zu lagern, das zwischen der Drehwelle (6) und einer Gleitoberfläche (34A) des Gleitlagers (34) zugeführt wird.

5. Windturbinen-Energieerzeugungsvorrichtung (1) nach Anspruch 4,
wobei die angetriebene Einheit (7, 14) eine Hydraulikpumpe (14) ist, und wobei das Fluid (36) Arbeitsöl der Hydraulikpumpe (14) ist.

6. Windturbinen-Energieerzeugungsvorrichtung (1) nach Anspruch 3, ferner umfassend
Schmieröl, das zwischen der Drehwelle (6) und einer Gleitoberfläche (34A) des Gleitlagers (34) gehalten wird und eine Viskosität von nicht unter VG 160 aufweist.

7. Windturbinen-Energieerzeugungsvorrichtung (1) nach Anspruch 3, ferner umfassend
Schmierfett, das zwischen der Drehwelle (6) und einer Gleitoberfläche (34A) des Gleitlagers (34) gehalten wird.

8. Windturbinen-Energieerzeugungsvorrichtung (1) nach einem beliebigen der Ansprüche 3 bis 7,
wobei das vordere Lager (8) das Gleitlager (34) ist und
wobei zwischen dem vorderen Lager (8) und einem nabenseitigen Ende eines Gehäuses (34B) des vorderen Lagers (8) ein Zwischenraum (40) gebildet ist.

9. Windturbinen-Energieerzeugungsvorrichtung (1) nach Anspruch 8,
wobei der Zwischenraum (40) ein Glied (42) umfasst, das eine Steifigkeit aufweist, die kleiner als jene des Gehäuses (34B) ist.

10. Windturbinen-Energieerzeugungsvorrichtung (1) nach einem beliebigen der Ansprüche 3 bis 7,
wobei das vordere Lager (8) das Gleitlager (34) ist und
wobei das vordere Lager (8) an einem nabenseitigen Ende einen Schlitz (41) umfasst.

11. Windturbinen-Energieerzeugungsvorrichtung (1) nach einem beliebigen der Ansprüche 3 bis 10,
wobei das vordere Lager (8) das Gleitlager (34) ist und
wobei zwischen dem vorderen Lager (8) und der Drehwelle (6) eine Harzschicht (44) angeordnet ist.

12. Windturbinen-Energieerzeugungsvorrichtung (1) nach einem beliebigen der Ansprüche 3 bis 11,
wobei das vordere Lager (8) das Gleitlager (34) ist,
wobei eine Kontaktoberfläche (8B) des vorderen Lagers (8), die das Gehäuse (34B) des vorderen Lagers (8) berührt, mindestens in einer axialen Richtung der Drehwelle (6) gekrümmt ist, und
wobei eine Kontaktoberfläche (35) des Gehäuses (34B), die das vordere Lager (8) berührt, mindestens in der axialen Richtung gekrümmt ist und eine umgekehrte Gestalt der Kontaktoberfläche (8B) des vorderen Lagers (8) aufweist.

13. Windturbinen-Energieerzeugungsvorrichtung (1) nach einem beliebigen der Ansprüche 3 bis 12,
wobei das vordere Lager (18) das Gleitlager (34) umfasst, und
wobei das hintere Lager (10) ein Axialdrucklager (46) ist, das dazu ausgebildet ist, eine Last eines Moments um das vordere Lager (8) zu tragen.

14. Windturbinen-Energieerzeugungsvorrichtung (1) nach einem beliebigen der Ansprüche 1 bis 13,
wobei das hintere Lager (10) an einer von dem vorderen Lager (8) am weitesten entfernten Position und an einem Umfang des Turms (11) der Windturbinen-Energieerzeugungsvorrichtung (1) angeordnet ist.

## Revendications

1. Appareil de génération d'énergie à éolienne (1) comportant :
au moins une pale (2) ;
un moyeu (4) sur lequel la au moins une pale (2) est montée ;
un arbre de rotation (6) configuré pour tourner avec le moyeu (4) ;
un palier avant (8) destiné à supporter de façon rotative l'arbre de rotation (6) ;
un palier arrière (10) destiné à supporter de façon rotative l'arbre de rotation (6), disposé plus loin du moyeu (4) que le palier avant (8) ; et
une unité entraînée (7, 14) disposée entre le palier avant (8) et le palier arrière (10), et configurée pour être entraînée par l'arbre de rotation (6) ;
**caractérisé en ce qu'**il comporte un palier auxiliaire (12) disposé entre le palier avant (8) et l'unité entraînée (7, 14),
le palier auxiliaire (12) étant configuré pour assister le palier avant (8) et supporter l'arbre de rotation (6) de manière rotative lorsque le palier arrière (10) est enlevé de l'arbre de rotation (6), et pour ne pas supporter une charge de l'arbre de rotation (6) lorsque le palier arrière (10) est fixé sur l'arbre de rotation (6).

2. Appareil de génération d'énergie à éolienne (1) selon la revendication 1,
dans lequel le palier auxiliaire (12) est disposé entre l'arbre de rotation (6) et un élément stationnaire de l'appareil de génération d'énergie à éolienne (1) de telle sorte qu'un espace (32, 33) est formé entre le palier auxiliaire (12) et un de l'arbre de rotation (6) ou de l'élément stationnaire (30) lorsque le palier arrière (10) est fixé sur l'arbre de rotation (6), et
dans lequel une taille de l'espace (32, 33) est établie de telle sorte que le palier auxiliaire (12) est en contact avec l'un de l'arbre de rotation (6) ou de l'élément stationnaire (30) lorsque le palier arrière (10) est enlevé de l'arbre de rotation (6).

3. Appareil de génération d'énergie à éolienne (1) selon la revendication 1,
dans lequel au moins un du palier avant (8) ou du palier arrière (10) comprend un palier lisse (34).

4. Appareil de génération d'énergie à éolienne (1) selon la revendication 3,
dans lequel le palier lisse (34) est un palier hydrostatique configuré pour supporter l'arbre de rotation (6) de manière rotative avec un fluide (36) qui est délivré entre l'arbre de rotation (6) et une surface de glissement (34A) du palier lisse (34).

5. Appareil de génération d'énergie à éolienne (1) selon la revendication 4,
dans lequel l'unité entraînée (7, 14) est une pompe hydraulique (14), et
dans lequel le fluide (36) est de l'huile de travail de la pompe hydraulique (14).

6. Appareil de génération d'énergie à éolienne (1) selon la revendication 3, comportant en outre
de l'huile de lubrification qui est maintenue entre l'arbre de rotation (6) et une surface de glissement (34A) du palier lisse (34), et qui a une viscosité de pas moins de VG 160.

7. Appareil de génération d'énergie à éolienne (1) selon la revendication 3, comportant en outre
de la graisse de lubrification maintenue entre l'arbre de rotation (6) et une surface de glissement (34A) du palier lisse (34).

8. Appareil de génération d'énergie à éolienne (1) selon l'une quelconque des revendications 3 à 7,
dans lequel le palier avant (8) est le palier lisse (34), et
dans lequel un jeu (40) est formé entre le palier avant (8) et une extrémité sur un côté de moyeu d'un boîtier (34B) du palier avant (8).

9. Appareil de génération d'énergie à éolienne (1) selon la revendication 8,
dans lequel le jeu (40) comprend un élément (42) qui a une rigidité inférieure à celle du boîtier (34B).

10. Appareil de génération d'énergie à éolienne (1) selon l'une quelconque des revendications 3 à 7,
dans lequel le palier avant (8) est le palier lisse (34), et
dans lequel le palier avant (8) comprend une fente (41) sur une extrémité sur le côté de moyeu.

11. Appareil de génération d'énergie à éolienne (1) selon l'une quelconque des revendications 3 à 10,
dans lequel le palier avant (8) est le palier lisse (34), et
dans lequel une couche de résine (44) est disposée entre le palier avant (8) et l'arbre de rotation (6).

12. Appareil de génération d'énergie à éolienne (1) selon l'une quelconque des revendications 3 à 11,
dans lequel le palier avant (8) est le palier lisse (34),
dans lequel une surface de contact (8B) du palier avant (8) qui est en contact avec le boîtier (34B) du palier avant (8) est courbée au moins dans une direction axiale de l'arbre de rotation (6), et
dans lequel une surface de contact (35) du boîtier (34B) qui est en contact avec le palier avant (8) est courbée au moins dans la direction axiale, et a une forme inversée de la surface de contact (8B) du palier avant (8).

13. Appareil de génération d'énergie à éolienne (1) selon l'une quelconque des revendications 3 à 12,
dans lequel le palier avant (18) comprend le palier lisse (34), et
dans lequel le palier arrière (10) est un palier de butée (46) qui est configuré pour supporter une charge d'un moment autour du palier avant (8).

14. Appareil de génération d'énergie à éolienne (1) selon l'une quelconque des revendications 1 à 13,
dans lequel le palier arrière (10) est disposé dans une position la plus éloignée du palier avant (8) et sur une circonférence d'une tour (11) de l'appareil de génération d'énergie à éolienne (1).
